Europäisches Patentamt

European Patent Office

Office européen des brevets

(19)

(11) Publication number: **0 230 133 B1**

## EUROPEAN PATENT SPECIFICATION

(12)

(45) Date of publication of patent specification: **12.06.91**   (51) Int. Cl.⁵: **A01N 59/00, A61L 2/16**

(21) Application number: **86309914.9**

(22) Date of filing: **18.12.86**

(54) Disinfecting and sterilizing compositions.

(30) Priority: **19.12.85 GB 8531271**

(43) Date of publication of application:
**29.07.87 Bulletin 87/31**

(45) Publication of the grant of the patent:
**12.06.91 Bulletin 91/24**

(84) Designated Contracting States:
**AT BE CH DE ES FR GB IT LI LU NL SE**

(56) References cited:
**GB-A- 1 165 098**
**US-A- 4 578 119**

**CHEMICAL ABSTRACTS, vol. 102, no. 2, 14th January 1985, page 363, abstract no. 12381n, Columbus, Ohio, US, & JP-A-59 155 311**

(73) Proprietor: **JOHNSON & JOHNSON MEDICAL, INC.**
**One Johnson & Johnson Plaza**
**New Brunswick, New Jersey 08933(US)**

(72) Inventor: **Hardie, Ian Duncan**
**36 Comiston Drive**
**Edinburgh, EH10 5QR(GB)**
Inventor: **Miller, Elizabeth Ann**
**105 Spottiswoode Gardens Mid Calder**
**Livingston Scotland(GB)**

(74) Representative: **Fisher, Adrian John et al**
**CARPMAELS & RANSFORD 43 Bloomsbury Square**
**London WC1A 2RA(GB)**

**Description**

This invention relates to a method of disinfecting spillages of blood.

Any spillage of blood represents a potential source of infection by virtue of the many pathogens, such as bacteria and viruses, which may be present therein. Such spillages, of course, are not uncommon, especially in hospital casualty departments, wards, operating rooms, and laboratories. The usual hospital procedure for cleaning up a potentially contaminated spillage involves blotting up the free liquid with paper towels, washing the contaminated surface with a disinfectant composition and then blotting up the residue. Persons carrying out this operation are exposed to grave risk of infection by any pathogen which may be present in the spilt blood.

Attempts are made to minimise this risk by flooding blood spillages with disinfectant solutions, particularly solutions of sodium hypochlorite containing 10,000 ppm available chlorine. At this level of available chlorine, it is necessary to use a substantial excess (by volume) of hypochlorite solution as compared with the volume of the spillage, if a satisfactory degree of disinfection is to be obtained.

It has more recently been proposed to decontaminate spillages of blood simply by scattering a bacteriostatic powder thereover. A bacteriostatic powder, said to contain calcium hypochlorite as the disinfectant agent, is available commercially for this purpose. This known bacteriostatic powder contains an inert filler, so that it is capable of absorbing, at least to a limited extent, the blood to which it is applied. This is said to facilitate subsequent disposal of the decontaminated spillage.

We have now discovered that a particular disinfectant composition, known per se, can be used in the same manner as the bacteriostatic powder of the prior art, but with a number of advantages as compared therewith. Principal amongst these advantages are the efficacy with which a spillage may be rendered safe, and ease of disposal of the spillage after decontamination.

The composition in question is an efferverscent composition (meaning a composition which effervesces on coming into contact with moisture) which includes a source of available chlorine. Such compositions are disclosed in British Patent Specification No. 1165098 as being suitable for preparing disinfectant solutions, and are available for this purpose (in tabletted form) under the Trade Mark PRESEPT. In this latter context, the advantage of effervescence is that it assists in disintegration of the tablet, thus making dissolution easier. We have now discovered, however, that the effervescence of such a chlorine generating composition gives rise to an unrelated and unexpected property, namely the ability to cause solidification of blood with which it comes into contact.

According to the present invention, there is provided a method of disinfecting a spillage of blood, comprising scattering on such a spillage a powdered or granular effervescent composition containing a source of available chlorine.

The mechanism by which effervescent chlorine-generating compositions cause blood to solidify is not fully understood, but it has a number of important consequences. Of particular importance is the fact that a blood spillage, once it has formed a coherent mass, is more manageable and more easily disposed of.

The chemical solidification of blood which is achieved with effervescent chlorine-generating compositions means that it is not necessary to use the generally inert, bulk-forming materials which are present in the commercially available disinfectant powder referred to above. As mentioned above, such bulk-forming materials have some absorbent properties, but they also have a number of disadvantages. For example, the individual filler particles remain essentially discrete, even when saturated with blood. This means that the saturated mass, while being relatively solid, is friable and non-coherent. Moreover, the filler particles are insoluble in water, with the result that it is very difficult to pick then up from a damp surface, even using a wet cloth. In contrast, the effervescent and chlorine-generating ingredients of the composition of the present invention are all water-soluble, so that a blood spillage which is decontaminated according to the invention can still be cleaned away entirely using a wet cloth.

A further advantage arising from the use of effervescent chlorine-generating compositions is that the effervescence is found to cause thorough mixing of the chlorine-generating composition with the blood, so that complete inactivation of infectious agents is achieved very rapidly.

The source of available chlorine may be, for example, a hypochlorite such as calcium hypochlorite, a sulphonchloramide such as chloramine-T, or a heterocyclic compound with nitrogen in the ring such as a dichloroisocyanurate or trichloromelamine. Preferably, however, the source of available chlorine is an alkali metal salt of a heterocyclic compound with nitrogen in the ring, and more preferably sodium dichloroisocyanurate. The chlorine-containing compound preferably constitutes at least 20% , and more preferably at least 30% by weight, for example at least 50% by weight of the composition.

The efferverscent properties are most conveniently achieved by using a carbonate or hydrogen carbonate (and preferably an alkali metal hydrogen carbonate) in conjunction with a compound which yields an acidic solution in water, for example the salt of a strong acid and a weak base, or an acid salt such as sodium hydrogen sulphate or potassium hydrogen sulphate. Preferably, however, the acidic compound is an organic acid such as citric acid, tartaric acid or adipic acid. Adipic acid is particularly preferred.

Experiments have shown that it is desirable to achieve and available chlorine concentration of at least 50,000 ppm in blood in order to obtain satisfactory decontamination. When sodium dichloroisocyanurate (NaDCC) is used as the source of available chlorine, this means that it is desirable to use at least 1 g of NaDCC for every 10 ml of blood to be treated. Less effective sources of chlorine should, of course, be used in correspondingly higher amounts.

The composition of the present invention will generally contain from 10 to 90% by weight of chlorine-generating compound, and more preferably from 20 to 80% by weight. A particularly effective balance between the level of chlorine generation and degree of effervescence is obtained with compositions containing from 30 to 70% of chlorine-generating compound and from 70 to 30% of effervescence producing reagents, and even more preferably from 40 to 60% of chlorine-generating compound and from 60 to 40% of effervescence-producing reagents.

It will be understood, of course, that the composition may contain other ingredients apart from the chlorine-generating compound and the effervescence-producing reagents. In order to avoid unnecessary dilution of the active ingredients, however, it is preferred that the effervescence-producing reagents and chlorine-generating compound together constitute from 40 to 100% by weight of the composition. Preferably, the effervescence-producing reagents and chlorine-generating compound together constitute at least 60% and more preferably at least 80% by weight of the composition.

Disinfectant compositions suitable for use in the present invention are further illustrated by the following examples.

EXAMPLE 1

The antibacterial efficacy of a number of chlorine-generating compounds was tested in the following manner.

Defibrinated horse blood (Oxoid RS50) was innoculated with an overnight culture of Staphylococcus aureus (ATCC 9144) in nutrient broth (Oxoid CM1) to give a concentration of approximately $10^7$ organisms/ml. Viable organisms were counted by plating on Trypticase Soy Agar (BBL 11043), and incubating for 48 h at 32°C.

A weighed quantity of disinfectant powder was then added to a measured volume of the innoculated blood. After one minute, a solution of sodium thiosulphate (0.5% w/v) in nutrient broth was added to neutralise any remaining chlorine-generating compound. The efficacy of neutralisation was established by using starch iodide indicator paper to detect available chlorine and by the Maurer Neutralisation test (Maurer, I.M. Hospital Hygiene, 2nd Edition, Edward Arnold, London, 1978).

Surviving organisms were counted by plating on Trypticase Soy Agar, as above, and the bactericidal properties of the test composition were expressed as the log reduction in the number of viable organisms after exposure to the test composition for one minute.

NaDCC, calcium hypochlorite, chloramine-T and trichloromelamine were all tested at various ratios of blood volume:powder weight, and the results are set out in Table 1 below:

**Table 1:** **Log reduction in viable organisms (_S. aureus_) in blood after one minute contact with test compound.**

| Ratio Blood: powder (ml:g) | NaDCC | Calcium hypochlor- ite | Chlora- mine T | Trichloro- melamine |
|---|---|---|---|---|
| 1:1 | >6 | >6 | >5 | >6 |
| 2.5:1 | >6 | >6 | >5 | >6 |
| 5:1 | >6 | >6 | 4.8 | >6 |
| 7.5:1 | 3.9 | 3.6 | 5.3 | >6 |

It will be seen that all four compounds were highly effective against S.aureus, with NaDCC, calcium hypochlorite and trichloromelamine being particularly so. NaDCC was chosen for further tests.

EXAMPLE 2

A mixture of the following components was prepared.

| | |
|---|---|
| Sodium dichloroisocyanurate | 50% by weight |
| adipic acid | 24% by weight |
| sodium hydrogen carbonate | 26% by weight |

When scattered on a spillage of blood, the composition was found to effervesce vigorously and cause solidification of the blood in less than 20 seconds. The blood darkened very rapidly as a result of oxidation by chlorine.

The antimicrobial efficacy of this effervescent composition was tested against three different organisms (S.aureus, Streptococcus faecalis and Escherichia coli) in the manner described in Example 1. The results were as set out in Table 2.

4

## Table 2: Log reduction in viable organisms after one minute contact with composition.

| Ratio blood: powder (ml:g) | S.aureus | Strep.faecalis | E.coli |
|---|---|---|---|
| 1:1 | >5 | >5 | >5 |
| 2.5:1 | >5 | >5 | >5 |
| 5:1 | >5 | >5 | >5 |
| 7.5:1 | 3.9 | >5 | 4.3 |

The results show that the effervescent composition according to the invention is highly effective against a range of different organisms at a blood:powder ratio of up to 5:1. At this ratio, the resultant mixture will contain approximately 64000 ppm available chlorine.

EXAMPLE 3

A number of different effervescent systems were tested in compositions containing equal weights of NaDCC and effervescent system. The different systems were as follows:

| A. | citric acid | 22% w/w |
|---|---|---|
| | tartaric acid | 25% w/w |
| | sodium hydrogen carbonate | 53% w/w |

| B. | sodium hydrogen sulphate | 33% w/w |
|---|---|---|
| | sodium hydrogen carbonate | 67% w/w |

| C. | potassium hydrogen tartrate | 30% w/w |
|---|---|---|
| | citric acid | 20% w/w |
| | potassium hydrogen carbonate | 50% w/w |

| D. | tartaric acid | 20% w/w |
|---|---|---|
| | sodium hydrogen carbonate | 60% w/w |
| | sodium potassium tartrate | 20% w/w |

Samples A and C were found to give conspicuous effervescence and coagulation when 15 g was added to 5 ml blood. samples B and D were less effective (both in terms of effervescence and coagulation), presumably as a result of the relatively low levels of acidic compound used.

EXAMPLE 4

In order to demonstrate that the blood-coagulating effect depends not only on the presence of effervescence-producing reagents, but also on the presence of a sufficient level of chlorine generation, compositions containing different proportions of NaDCC were tested on horse blood . In each case, the balance of the composition was a mixture of adipic acid and sodium hydrogen carbonate in a weight ratio of 12:13.

It was found that when 15 g of test composition was scattered on 5 ml of horse blood effervescence was observed irrespective of the NaDCC content.

Coagulation was observed with compositions containing 25% or 50% NaDCC by weight, but not with compositions containing only l2.5% or 5% by weight.

EXAMPLE 5

The ease or otherwise of disposing of a blood spillage is, of course, somewhat subjective. In order to demonstrate the superiority of the compositions of the present invention over the existing disinfectant powder, a panel of volunteers were asked to try both compositions. This was done by placing 5 ml of defibrinated horse blood on a white melamine surface. The volunteers were asked to don gloves and decontaminate and clean up the blood spillage using first one powder then the second. After cleaning up the blood spillage with the first powder the volunteers were asked to use a solution of PRESEPT tablets containing 10,000 ppm av.cl. to disinfect the surface before evaluating the second powder.

The volunteers had not seen either powder before and the powders were assessed in a single blind manner.

The panel thought that the two materials caused spilt blood to be absorbed or solidify to approximately the same extent. Differences became apparent, however, when the panel were asked whether the absorbed or solidified blood was easy to pick up. 25% of the volunteers thought that the spillage was "very easy" to pick up after treatment with the composition according to the invention, 42% thought it "fairly easy", 25% thought it "quite hard" and only 8% "very hard". In contrast, none of the volunteers thought it "very easy" with the prior art composition, 25% thought it "fairly easy", 50% thought it "quite hard" and 25% "very hard".

When it came to washing the stained surface with disinfectant solution, important differences were again noticed. All volunteers found it "very easy" to wipe the stained surface clean after using the composition according to the invention, whereas only 25% found it "very easy" after using the commercially available composition. 25% of volunteers said that they had to wipe "quite hard" to clean the surface after using the commercially available composition, and they had to use more cloths.

It will of course be understood that the present invention has been described above purely by way of example, and modifications of detail can be made within the scope of the invention.

## Claims

1. A method of disinfecting a spillage of blood, comprising scattering on such a spillage a powdered or granular effervescent composition containing a source of available chlorine.

2. A method according to claim 1, wherein the composition contains a carbonate or hydrogen carbonate and a compound which yields an acidic solution in water.

3. A method according to claim 2 wherein the compound which yields an acidic solution in water is an organic acid.

4. A method according to claim 3 wherein the organic acid is adipic acid.

5. A method according to any preceding claim wherein the source of available chlorine is a dichloroisocyanurate.

6. A method according to any preceding claim wherein the source of available chlorine constitutes at least 20% by weight of the composition.

**Revendications**

1. Procédé de désinfection de sang répandu, qui comprend une étape qui consiste à éparpiller sur le sang répandu une composition effervescente pulvérulente ou granulaire content une source de chlore disponible.

2. Procédé selon la revendication 1, dans lequel la composition contient un carbonate ou hydrogénocarbonate et un composé qui donne une solution acide dans l'eau.

3. Procédé selon la revendication 2, dans lequel le composé qui donne une solution acide dans l'eau est un acide organique.

4. Procédé selon la revendication 3, dans lequel l'acide organique est l'acide adipique.

5. Procédé selon l'une quelconque des revendications précédentes, dans lequel la source de chlore disponible est un dichlorisocyanurate

6. Procédé selon l'une quelconque des revendications précédentes, dans lequel la source de chlore disponible constitue au moins 20% en poids de la composition.

**Ansprüche**

1. Verfahren zum Desinfizieren von vergossenem Blut, umfassend das Aufstreuen einer pulverisierten oder körnigen, aufschäumenden Zusammensetzung, welche eine Quelle an verfügbarem Chlor enthält, auf ein solches vergossenes Blut.

2. Verfahren nach Anspruch 1, worin die Zusammensetzung ein Carbonat oder Hydrogencarbonat und eine Verbindung enthält, welche in Wassser eine saure Lösung ergibt.

3. Verfahren nach Anspruch 2, worin die Verbindung, welche in Wasser eine saure Lösung ergibt, eine organische Säure ist.

4. Verfahren nach Anspruch 3, worin die organische Säure Adipinsäure ist.

5. Verfahren nach einem der vorherstehenden Ansprüche, worin die Quelle an verfügbarem Chlor ein Dichlorisocyanurat ist.

6. Verfahren nach einem der vorherstehenden Ansprüche, worin die Quelle an verfügbarem Chlor mindestens 20 Gew.-% der Zusammensetzung bildet.